# EUROPÄISCHE PATENTANMELDUNG

(11) **EP 2 070 423 A1**
(43) Veröffentlichungstag der Anmeldung: **17.06.2009**
(21) Anmeldenummer: 07122756.5
(22) Anmeldetag: 10.12.2007
(51) Int. Cl.: A23G 9/04, A23G 9/06, A23G 9/20, A23G 9/28, B65D 83/14

(54) **Verfahren zur Ausgabe von gekühlter, insbesondere gefrorener Speise**

(71) Anmelder: Kaiserschote Feinkost Catering GmbH, 50259 Pulheim-Brauweiler (DE)
(72) Erfinder: Karpinski, Didier, 50259 Pulheim-Brauweiler (DE)
(74) Vertreter: von Kreisler Selting Werner

(57) **Zusammenfassung**

Die Erfindung betrifft ein Verfahren zur Ausgabe von gekühlter, insbesondere gefrorener Speise, insbesondere Speiseeis wie z.B. Softeis, Sorbet oder kalter Schaum, und Creme oder dergleichen. Bei dem Verfahren wird eine Speiserohrmasse aus einem Auslassventil (18) einer mit mindestens einem Vorratsbehältnis (12) verbundenen Auslassleitung (16) ausgegeben. Die Speiserohmasse kommt innerhalb der Auslassleitung (16) mit einem expandierbaren Kühlmedium in Kontakt, das aus einer Flüssig- oder Festphase in die Gasphase überführt wird und dabei der in der Auslassleitung (16) befindlichen und/oder aus der Auslassleitung (16) austretenden Speiserohmasse zur Abkühlung derselben Wärme entzieht, wobei das Gas aus der gekühlten Speiserohmasse außerhalb der Auslassleitung (16) oder zusammen mit der Speiserohmasse aus der Auslassleitung (16) austritt.

## Beschreibung

Die Erfindung betrifft ein Verfahren zur Ausgabe von gekühlter, insbesondere gefrorener Speise, bei der es sich insbesondere um Speiseeis, wie beispielsweise Softeis, Sorbet oder kalten Schaum, oder um Creme handelt.

Die Abgabe gekühlter Speisen wie beispielsweise Softeis oder dergleichen durch entsprechende Automaten ist grundsätzlich bekannt. Hierbei wird die Speiseeisrohmasse durch Kühlrohre oder entlang von Kühlflächen geleitet, um bei Betätigung eines Ausgabeventils (Zapfhahn oder dergleichen) ausgegeben zu werden. Dabei steht die Speiseeisrohmasse unter einem gewissen Förderdruck, um bei Öffnung des Auslassventils herauszutreten.

Ferner ist es bekannt, zur Kühlung von automatisch ausgegebenen Eisportionen flüssigen Stickstoff zu verwenden. Es ist beispielsweise in der JP-A-07115911 beschrieben, die Oberfläche von portioniertem Eis unter einer Glocke mit flüssigem Stickstoff zu kühlen, der innerhalb der Glocke versprüht wird.

Aus US-A-2006/0110515 ist es bekannt, die Speiseeisrohmasse einer Eisportion in einem Gefäß (beispielsweise Becher), in dem die Eisportion anschließend serviert wird, mit Hilfe von flüssigem Stickstoff zu kühlen. Dabei erfolgt der Prozess der Kühlung der Speiseeisrohmasse innerhalb der Portioniermaschine, wobei austretender gasförmiger Stickstoff innerhalb der Maschine aufgefangen und kontrolliert abgeleitet wird. Das von flüssigem bzw. gasförmigem Stickstoff befreite, gekühlte Eis kann dann entnommen werden.

Auch von der industriellen bzw. gewerblichen Herstellung von Speiseeis ist es bekannt, beim Verrühren der Speiseeisrohmasse und ihrer Komponenten flüssigen Stickstoff in die verrührte Masse bzw. zu verrührende Masse einzuleiten (siehe US-A-4,993,238 und US-A-5,098,732). Wenn das auf diese Weise hergestellte Speiseeis dann verzehrt bzw. verkauft wird, ist der Stickstoff bereits entwichen.

Aufgabe der Erfindung ist es, ein Verfahren für die Ausgabe von gekühlter, insbesondere gefrorener Speise wie beispielsweise Speiseeis oder Creme zu schaffen, wobei die Ausgabe der Speise maschinell und optisch ansprechend und somit attraktiv erfolgt.

Zur Lösung dieser Aufgabe wird mit der Erfindung ein Verfahren zur Ausgabe von gekühlter, insbesondere gefrorener Speise, insbesondere Speiseeis wie z.B. Softeis, Sorbet oder kalter Schaum, oder Creme oder dergleichen vorgeschlagen, wobei bei dem Verfahren
- eine Speiserohrmasse aus einem Auslassventil einer mit mindestens einem Vorratsbehältnis verbundenen Auslassleitung ausgegeben wird, und
- die Speiserohmasse innerhalb der Auslassleitung mit einem expandierbaren Kühlmedium in Kontakt kommt, das aus einer Flüssig- oder Festphase in die Gasphase überführt wird und dabei der in der Auslassleitung befindlichen und/oder aus der Auslassleitung austretenden Speiserohmasse zur Abkühlung derselben Wärme entzieht,
- wobei das Gas aus der gekühlten Speiserohmasse außerhalb der Auslassleitung oder zusammen mit der Speiserohmasse aus der Auslassleitung austritt.

Das Wesensmerkrnal des erfindungsgemäßen Verfahrens besteht darin, dass die gefrorene Speise über ein Auslassventil aus einer Maschine ausgegeben wird. Dieses Prinzip ist grundsätzlich von der Softeisausgabe her bekannt. Erfindungsgemäß wird nun die Speise kurz vor ihrer Ausgabe mit einem expandierbaren Kühlmedium vermischt und alsdann ausgegeben, wobei das expandierbare Kühlmedium noch außerhalb der Maschine aus der gefrorenen Speise austritt, was die Attraktivität des Aus- bzw. Abgabevorgangs der Speise wesentlich steigert. Bei dem expandierbaren Medium handelt es sich um ein Material, das bis zu seiner Einleitung in die zu kühlende Speiserohmasse in einer Flüssig- oder Festphase vorliegt und dann in eine Gasphase übergeht. Alternativ ist es auch möglich, dass das Kühlmedium noch gasförmig ist, wenn es der zu kühlenden Speiserohmasse zugegeben wird, wobei es allerdings innerhalb der zu kühlenden Speiserohmasse noch weiterhin expandiert. Der Expansionsprozess innerhalb der Gasphase bzw. aus der Flüssigphase in die Gasphase oder gegebenenfalls auch direkt aus der Festphase in die Gasphase (Sublimation) entzieht der Speiserohmasse Wärme und kühlt die Speiserohmasse damit ab. Dieser Prozess hält gegebenenfalls noch außerhalb der Ausgabemaschine an.

Eine nach dem erfindungsgemäßen Verfahren arbeitende Vorrichtung lässt sich mit Vorteil insbesondere beim Catering einsetzen, wo die Gäste selbst oder das Personal beispielsweise des Cateringunternehmens vor den Augen der Gäste Portionen gefrorener Speise automatisch ausgeben können. Die aufsteigenden Gase außerhalb der Ausgabemaschine steigern dabei die Attraktivität des Ausgabe- und Portioniervorgangs.

In vorteilhafter Weiterbildung der Erfindung ist vorgesehen, dass die Ausgabevorrichtung und insbesondere die Auslassleitung mit Auslassventil von Zeit zu Zeit mit Wasser durchspült und gereinigt wird. Als Kühlmedium eignet sich insbesondere flüssiger Stickstoff. Der Förderdruck zum Austragen der gekühlten Speiserohmasse aus dem Auslassventil wird zweckmäßigerweise durch CO₂ oder mechanisch arbeitende Förderpumpe oder dergleichen aufgebracht. Die Vorrichtung ist zweckmäßigerweise mit Bedienelementen versehen, die es dem Bediener erlauben, verschiedene Speisekomponenten miteinander zu mischen und zu kombinieren. Auch können der Speise auf diese Weise verschiedene Geschmacksrichtungen durch entsprechende Zutaten verliehen werden. Das Auslassventil der Vorrichtung kann beispielsweise als Pistole an einem stationären oder tragbaren Gerät ausgebildet sein.

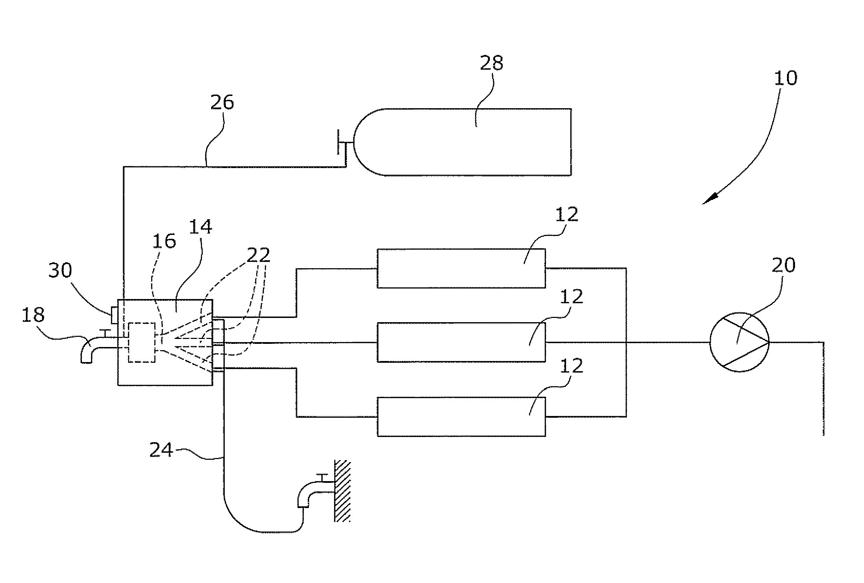

Die Erfindung wird nachfolgend anhand eines Ausführungsbeispiels und unter Bezugnahme auf die Zeichnung näher erläutert.

In der Zeichnung ist schematisch eine Vorrichtung 10 zur Ausgabe von gefrorenem Speiseeis gezeigt. Die Vorrichtung 10 umfasst mehrere Vorratsbehältnisse 12 für verschiedene Speiserohmassen, die in Fluidverbindung mit einer Mischeinrichtung 14 stehen, die eine Auslassleitung 16 mit Auslassventil 18 aufweist. Die Vorratsbehältnisse 12 stehen unter einem von einer Pumpe (Kompressor oder dergleichen) aufgebrachten Druck. Ferner ist die Mischeinrichtung 14 und die sich durch die Mischeinrichtung 14 erstreckenden Leitungen 22, welche zur Auslassleitung 16 führen, mit Wasser durchspülbar, das über eine Leitung 24 zuführbar ist.

Ferner wird in die Auslassleitung 16 kurz vor dem Auslassventil 18 über eine Leitung 26 aus einem Druckbehälter 28 flüssiger Stickstoff eingebracht. Der flüssige Stickstoff kühlt die gegebenenfalls vermischte Speiserohmasse innerhalb der Auslassleitung 26 und unmittelbar vor dem Auslassventil 18, so dass, wenn dieses geöffnet wird, gekühltes bzw. gefrorenes Speiseeis ausgegeben wird, aus dem außerhalb des Auslassventils 18 noch gasförmiger Stickstoff austritt. Über ein Bedienfeld 30 kann der Benutzer der Vorrichtung 10 das jeweils gewünschte Speiseeisprodukt auswählen.

## Patentansprüche

1. Verfahren zur Ausgabe von gekühlter, insbesondere gefrorener Speise, insbesondere Speiseeis wie z.B. Softeis, Sorbet oder kalter Schaum, und Creme oder dergleichen, bei dem
- eine Speiserohrmasse aus einem Auslassventil (18) einer mit mindestens einem Vorratsbehältnis (12) verbundenen Auslassleitung (16) ausgegeben wird, und
- die Speiserohmasse innerhalb der Auslassleitung (16) mit einem expandierbaren Kühlmedium in Kontakt kommt, das aus einer Flüssig- oder Festphase in die Gasphase überführt wird und dabei der in der Auslassleitung (16) befindlichen und/oder aus der Auslassleitung (16) austretenden Speiserohmasse zur Abkühlung derselben Wärme entzieht,
- wobei das Gas aus der gekühlten Speiserohmasse außerhalb der Auslassleitung (16) oder zusammen mit der Speiserohmasse aus der Auslassleitung (16) austritt.

2. Verfahren nach Anspruch 1, **dadurch gekennzeichnet, dass** mehrere verschiedene, in unterschiedlichen Vorratsbehältnissen (12) befindliche Speiserohmassen in der Ausfassleitung (16) gemischt oder in gemischtem Zustand der Auslassleitung (16) zugeführt werden.

3. Verfahren nach Anspruch 1 oder 2, **dadurch gekennzeichnet, dass** der oder die Vorratsbehälter (12) einem einstellbaren Förderdruck ausgesetzt werden.

4. Verfahren nach einem der Ansprüche 1 bis 3, **dadurch gekennzeichnet, dass** das Kühlmedium flüssiger Stickstoff ist.

5. Verfahren nach einem der Ansprüche 1 bis 4, **dadurch gekennzeichnet, dass** die Auslassleitung (16) mit diese durchspülendes Wasser gereinigt wird.
